# EUROPEAN PATENT APPLICATION

(11) **EP 1 598 882 A1**
(43) Date of publication of application: **23.11.2005**
(21) Application number: 03772852.4
(22) Date of filing: 18.11.2003
(51) Int. Cl.: H01M 2/06, H01M 2/26, H01M 2/30

(54) **METHOD AND APPARATUS FOR PASTING SEALING MATERIAL TO LEAD WIRE FOR USE IN SMALL BATTERY**

(30) Priority: 20.11.2002 JP 2002336771
(71) Applicant: TDK Corporation, Chuo-ku, Tokyo 103-8272 (JP)
(72) Inventor: ASAKURA, Tomomi, TDK Corporation, Chuo-ku, Tokyo 103-8272 (JP); OHTSUKA, Masayuki, TDK Corporation, Chuo-ku, Tokyo 103-8272 (JP)
(74) Representative: Grünecker, Kinkeldey, Stockmair & Schwanhäusser Anwaltssozietät
(86) International application number: PCT/JP2003/014647
(87) International publication number: WO 2004/047200

(57) **Abstract**

An object of the present invention is to improve attachment between a lead material and a sealing material used in small-size batteries. To achieve the object, in the sealing material attaching process, the sealing material is cut to a plurality of pieces each having a predetermined length. The pieces are held by pressure contact tools and adjacent pieces are opposed to each other with the lead material between to form pairs. These pairs are disposed at predetermined intervals, and then the sealing materials are attached to the lead material by means of the pressure contact tools.

## Description

### TECHNICAL FIELD

The present invention relates to a lead wire used in a battery having an outer jacket made of aluminum etc. such as a polymer lithium battery, a lithium ion battery and an advanced lithium ion battery. More particularly, the present invention relates to a method of attaching a sealing material attached to the lead wire in order to provide a seal between lead wire and a laminate outer jacket, to the lead wire (material) and an attaching apparatus therefor.

### BACKGROUND ART

In recent years, with popularization of small and lightweight mobile terminal devices such as cellular telephones, batteries for supplying electric power for driving these mobile terminal devices have been developed. Such batteries are required to be small in size, have durability against many times of recharging operations over a significantly long term and show stable output characteristics. Lithium ion batteries such as polymer lithium secondary batteries having a polymeric electrolyte layer are widely used as batteries that meet the above requirements.

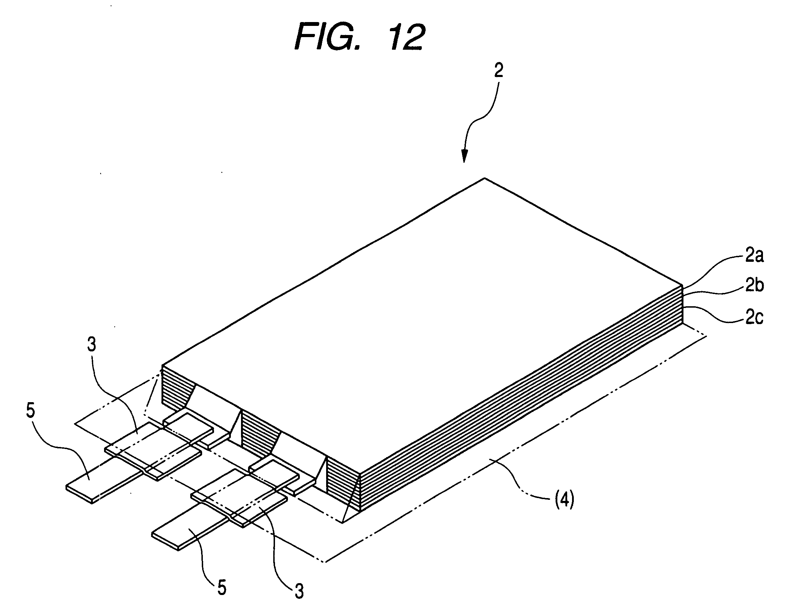

Fig. 12 schematically shows the structure of a polymer lithium secondary battery 2. The polymer lithium secondary battery 2 is composed of a polymer electrolyte layer 2a formed by mixing a plasticizing material to a high polymer material, a positive electrode 2b and a negative electrode 2c laminated one another, and lead wire members 5 for tapping the power are connected with both the electrodes. Characteristics of the materials used in the electrolyte layer and other parts of the battery can change significantly depending on moisture in the atmosphere and other factors. In view of this, the parts other than the lead wire members 5 (which will be referred to as lead materials), namely, the electrolyte layer 2a, the positive electrode 2b and the negative electrode 2c are enclosed in an outer jacket member 4 that is not shown in the drawing. The outer jacket member 4 encloses the electrolyte layer 2a and other parts in the position shown by the chain line in the drawing. It is necessary to draw the lead materials 5 out of the outer jacket. Accordingly, sealing materials 3 are inserted between the lead materials 5 and the outer jacket member 4 so that perfect sealing is achieved around the lead materials.

There are two methods, which will be described in the following, commonly used for inserting the sealing materials.

First, in some cases, lead materials have already been connected with a battery before it is enclosed in the outer jacket member, and the enclosing process and attaching of sealing materials to the lead materials are carried out at the same time. In this case, the lead materials connected to the positive and negative electrodes are caused to be in alignment with the laminate member including the electrolyte layer etc. and sealing materials are disposed on the upper and lower sides of the lead materials along the direction perpendicular to the direction in which the lead materials extend. After that, the sealing materials and the lead materials are pressed together through the outer jacket member and heated. Thus, the sealing material made of a fusible material is fused to achieve fusion bonding and sealing between the outer jacket member and the lead materials.

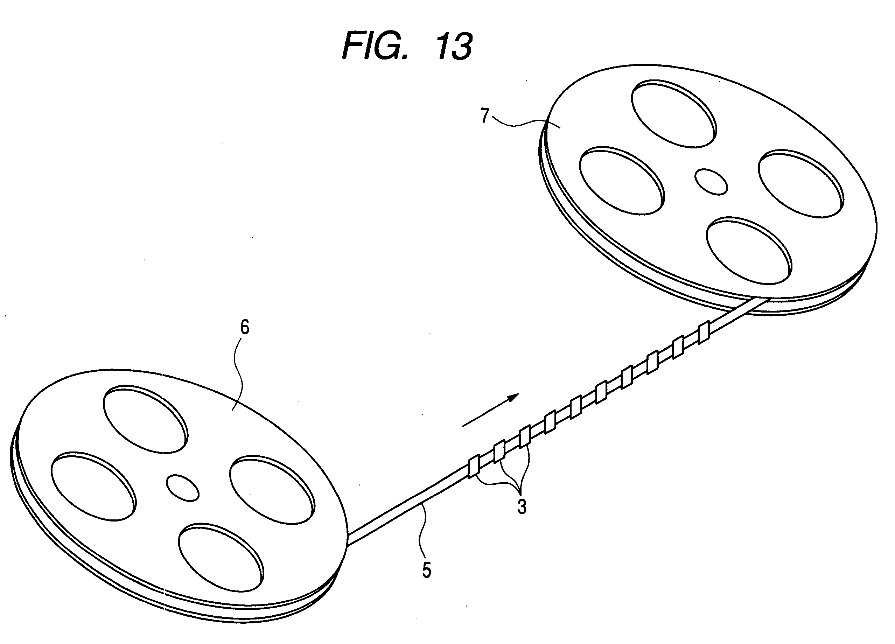

Secondly, in other cases, a laminate member including an electrolyte layer etc. is formed by using a sealing material on which a lead material has been attached in advance, and then it is subjected to an enclosing process. In this case, as will be seen in an example disclosed in Japanese Patent Application Laid-Open NO. 11-312514, a lead material on which a sealing material is attached is formed in advance. Such a lead material is cut fitly, and lead materials attached with sealing materials after cut are used for producing a battery. In this connection, in fusion bonding the sealing material and the outer jacket member, these members are pressed and heated through the outer jacket member. Fig. 13 schematically shows such a process of attaching a sealing material to a lead material. As shown in Fig. 13, the lead material 5 wound on a supply reel 6 is successively passed out along the direction indicated by an arrow, and pieces of the sealing material 3 are attached on the upper and the lower sides of the lead material at predetermined intervals. The lead material 5 on which the pieces of the sealing material 3 have been attached is rolled around a take-up reel 7.

In order to seal between the sealing material and the lead material, it is necessary to heat the surface of the lead material that is in contact with the sealing material to a temperature higher than the fusing temperature of the sealing material. However, in the aforementioned first method, since the heating is effected through the outer jacket member, heat-escape occurs through the outer jacket member. In both the cases, the lead material is usually made of a metal having a high heat conductivity, and heat-escape through the lead material also occurs. For this reason, in the case that the heating state is not known sufficiently, fusion of the sealing material can be insufficient and reliable sealing cannot be achieved in some cases.

On the other hand, if heating is effected for a long time more than the time required for heating the lead material sufficiently, the sealing material is melted excessively, and there can occur the situation that it extends off the predetermined sealing portion to adhere to a machine tool used in the pressing process. In view of this, it is required to control the melting state of the sealing member reliably during the pressing process. Furthermore, in the aforementioned first case, the surfaces such as the side surface of the lead material that are perpendicular to the direction in which the pressing force is applied are not in contact with the sealing material at the time when the pressing and fusion bonding process is started. Accordingly, the possibility that the sealing is insufficient in these portions is considered to be higher than in the case of the second case, in which the sealing material and the lead material have been fusion-bonded in advance.

In view of the above circumstances, if more reliable sealing performance is to be achieved, it is considered to be more preferable to employ the sealing process according to the above-described second case. In addition, this sealing process has an additional advantage of improvement in productivity in manufacturing batteries since fusion bonding of the lead material and the sealing material, which is the most time consuming process, has been finished in advance. However, in the second case, it is necessary to manufacture a lead material on which a sealing material has been attached in advance. In this case, it is considered that the fusion-bonded state of the sealing material and the lead material will not change basically in the process of fusion-bonding the outer jacket member and the sealing material that is effected later.

Accordingly, if a defect in the fusion-bonded state, such as a gap for example, is present in that process, it is difficult to mend it. Therefore, it is required that complete contact (fusion bonding) of the sealing material and the lead material be established when these materials are attached. For this purpose, methods of forming a sealing material on a lead material using a hot melt process or an extrusion lamination process have been employed. However, in the case that the sealing materials are to be formed on a plurality of independent small areas on the lead material, these methods involve an increase in complexity of equipments etc., and are not considered to be preferable from the viewpoint of manufacturing cost.

Furthermore, in the conventional process of cutting a tape-like sealing member and attaching it on a predetermined position on a lead material, the lead material is heated from the circumference of the sealing material. Accordingly, it is difficult to control the temperature of the lead material, and the attachment between the lead material and the sealing material cannot be controlled reliably, in some cases. In addition, in this case, surplus sealing material is cut and discarded. Thus, reduction of the discarded portion has been demanded from the standpoint of manufacturing cost saving.

Furthermore, since the aforementioned batteries are used in small terminal devices such as cellular phones, they are required to not only be made small but also have desired shapes and designs in accordance with the terminal devices. Accordingly, in attaching sealing materials on a lead material, it is required that the attaching pitch thereof or other factors can be changed easily. However, in the aforementioned hot melt process etc., changing of the attaching pitch requires complicated and fine adjustment of the equipment used in carrying out the method. In commonly used apparatuses for simultaneously attaching a plurality of sealing materials on a lead material, operations that require complicated and fine adjustment, such as once dismounting sealing material holding portions and changing their mounting pitch, are required.

### DISCLOSURE OF THE INVENTION

The present invention has been made in view of the above-described problems and has as an object to provide a method of attaching a sealing material to a lead material in which the attaching pitch etc. can be easily changed while reliable attachment between the lead material and the sealing material is ensured, and an apparatus having a simple structure used for carrying out the method.

To achieve the above object, according to the present invention, there is provided a method for attaching a sealing material to a lead material by splitting the sealing material into pieces each having a predetermined length and fusion-bonding the pieces to predetermined positions on the lead material respectively, comprising a step of holding the sealing material by means of a plurality of pressure contact tools, a step of cutting the sealing material thus held into the pieces each having a predetermined length using a plurality of cutting tools, a step of driving the plurality of pressure contact tools to transfer the pieces in such a way that adjacent pieces are opposed to each other with the lead material between to form pairs and the pairs are disposed on the lead material at regular intervals corresponding to the predetermined positions, and a step of attaching the sealing material pieces to the lead material by means of the plurality of pressure contact tools.

In the above-described method it is preferred that the lead material be disposed away from the sealing material by a predetermined distance and parallel to it and that while the pieces are transferred through the predetermined distance, the pairs be formed and the regular intervals between the pairs are arranged. It is also preferred that while the pieces are transferred, the adjacent pieces form pairs, and thereafter a plurality of the pairs be transferred onto the lead material following substantially radially patterned paths. Furthermore, it is also preferred that during the transfer of the pieces, the adjacent pieces form the pairs and the pieces be transferred onto the lead with the intervals between the pairs being changed at constant ratios. Still further, it is preferred that adjustment of the intervals between the pairs be performed simultaneously with the transfer of the pairs onto the lead material.

Furthermore, it is preferred that in the step of attaching the pieces to the lead material, the lead material be heated through an area other than the predetermined positions on which the pieces are attached. Furthermore it is preferred that the aforementioned method further include, in addition to the above-described steps, at least one of a step of pressurizing the lead material and the sealing materials attached on the lead material and simultaneously heating them to improve a re-pressure-contact condition, and a step of heating the lead material on which the sealing material has been attached and heating the attached sealing material to fuse the sealing material.

To achieve the aforementioned object, according to the invention, there is provided a method for attaching a sealing material to a lead material by splitting the sealing material into pieces each having a predetermined length and fusion-bonding the pieces to predetermined positions on the lead material respectively, wherein in a process of attaching the pieces to predetermined positions on the lead material, the lead material is heated through an area other than the predetermined positions.

In the above-described method, it is preferred that the method further include, at least one of a process of pressurizing the lead material and the sealing materials attached on the lead material and simultaneously heating them to improve a re-pressure-contact condition and a process of heating the lead material on which the sealing material has been attached and heating the attached sealing material to fuse the sealing material.

Furthermore, to achieve the aforementioned object, according to the present invention there is provided an apparatus for attaching a sealing material to a lead material by splitting the sealing material into pieces each having a predetermined length and fusion-bonding the pieces to predetermined positions on the lead material, wherein a sealing material attaching portion of the apparatus comprises a lead material holding tool for holding the lead material at a predetermined position, a cutting unit for splitting the sealing material into the plurality of pieces, a plurality of first pressure contact tools capable of holding the pieces and arranged along the length direction of the sealing material so as to correspond to alternate pieces in the series of the pieces, a plurality of second pressure contact tools capable of holding the pieces and arranged along the length direction of the sealing material so as to correspond to alternate pieces in the series of the pieces that are not held by the first pressure contact tools, and a pressure contact tool movement direction regulation apparatus for making the first pressure contact tools and the second pressure contact tools to transfer the pieces to the predetermined position on the lead material, for making the first pressure contact tools and the second pressure contact tools that are adjacent to each other are opposed with their positions that hold the pieces facing to each other to form pairs, and for changing intervals of the plurality of pairs of the first pressure contact tools and second pressure contact tools thus formed.

In the above-described apparatus, it is preferred that the pressure contact tool movement direction regulation apparatus comprise first projections formed at end portions of the first pressure contact tools, first cam grooves in which the first projections are received, second projections formed at end portions of the second pressure contact tools and second cam grooves in which the second projections are received and that when the first cam grooves and the second cam grooves are opposed to each other and viewed from above, the first cam grooves and the second cam grooves be arranged alternately at their base points so as to correspond to center-to-center intervals of the pieces and aligned to each other at a position predetermined distance away from the base points. Furthermore, it is preferred that the pressure contact tool movement direction regulation apparatus comprise first projections formed at end portions of the first pressure contact tools, first cam grooves in which the first projections are received, second projections formed at end portions of the second pressure contact tools and second cam grooves in which the second projections are received and that the first cam grooves and the second cam grooves are opposed to each other and viewed from above, the first cam grooves and the second cam grooves be arranged alternately at their base points so as to correspond to center-to-center intervals of the pieces and aligned to each other at a position predetermined distance away from the base points, and further extending from the aligned position with the aligned state being maintained wherein ratios of intervals of the cam grooves are kept constant.

In the above-descried apparatus, it is preferred that a member on which the first cam grooves are formed and a member on which the second cam grooves are formed can be moved in synchronization with each other independently from the first and second pressure contact tools. Furthermore, it is preferred that the lead material holding tool comprise a heater block that hold the lead material by a portion other than the predetermined positions on which the pieces are attached to heat the lead material. Still further, it is preferred that the above-described apparatus further comprise at least one of a pressure contact unit for pressing and heating the lead material and the sealing material attached on the lead material and a heating unit for heating the lead material on which the sealing material has been attached and heating the attached sealing material to fuse the attached sealing material.

Furthermore, to achieve the aforementioned object, according to the present invention there is provided an apparatus for attaching a sealing material to a lead material by splitting the sealing material into pieces each having a predetermined length and fusion-bonding the pieces to predetermined positions on the lead material, wherein a sealing material attaching portion of the apparatus comprises a lead material holding tool for holding the lead material at a predetermined position, a cutting unit for splitting the sealing material into the plurality of pieces, a plurality of first pressure contact tools capable of holding the pieces for transferring the pieces to predetermined positions on the lead material and attaching the pieces actually on the lead material, and a plurality of second pressure contact tools capable of holding the pieces for transferring the pieces to predetermined positions on the lead material and attaching the pieces actually on the lead material, wherein the lead material holding tool comprises a heater block that holds the lead material by a portion other than the predetermined positions on which the pieces are attached to heat the lead material.

In the above-described apparatus, it is preferred that the apparatus further comprise at least one of a pressure contact unit for pressing and heating the lead material and the sealing material attached on the lead material and a heating unit for heating the lead material on which the sealing material has been attached and heating the attached sealing material to fuse the attached sealing material.

### BRIEF DESCRIPTION OF THE DRAWINGS

Fig. 1 schematically shows the overall structure of a sealing material attaching apparatus according to an embodiment of the present invention as seen from the front.
Fig. 2 schematically shows the structure of an attaching portion according to a first embodiment of the present invention as seen from the front.
Fig. 3 schematically shows the attaching portion according to the first embodiment of the present invention as seen from a side.
Fig. 4 schematically shows the configuration components of a cutting unit 110 in the state for cutting a sealing material 3.
Fig. 5 schematically shows the configuration of the components of the cutting unit 110 in the state for attaching the sealing material 3 according to the first embodiment.
Fig. 6 shows the configuration of cam grooves in the first embodiment for illustrating the shape of the cam grooves formed on a upper base plate and a lower base plate.
Fig. 7 schematically shows an attaching portion according to a second embodiment of the present invention as seen from a side.
Fig. 8 is a perspective view schematically showing the configuration of components of a cutting unit according to the second embodiment in the state for attaching the sealing material 3.
Fig. 9A shows the configuration of cam grooves in the second embodiment for illustrating the shape of the cam grooves formed on a upper base plate and a lower base plate.
Fig. 9B shows the configuration of the cam grooves in the second embodiment for illustrating the shape of the cam grooves formed on a upper base plate and a lower base plate.

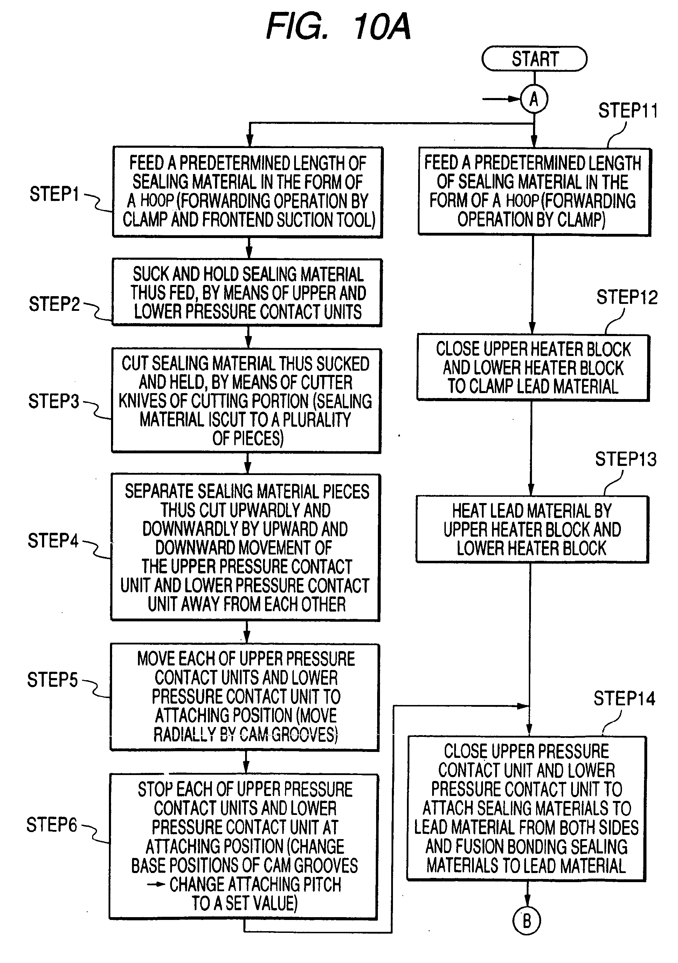

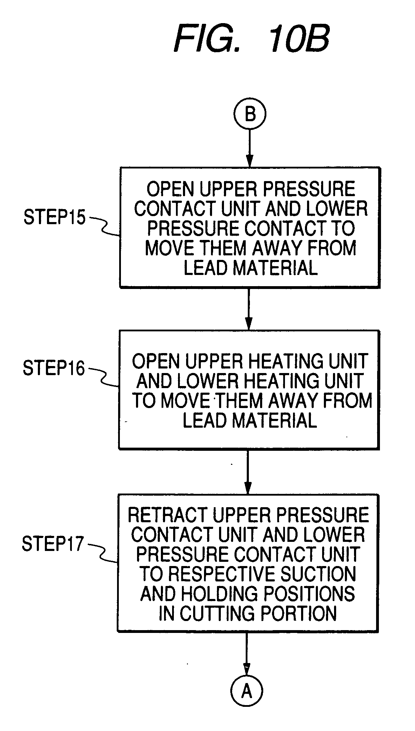

Fig. 10A and 10B are flow charts of a process for attaching a sealing material to a lead material according to the present invention.
Fig. 11A schematically shows a pressure contact unit according to the present invention as seen from the front.
Fig. 11B schematically shows a heating unit according to the present invention as seen from the front.
Fig. 12 schematically shows the structure of a polymer lithium secondary battery.
Fig. 13 schematically shows a process of attaching sealing materials to a lead material.

### THE BEST MODE FOR CARRYING OUT THE INVENTION

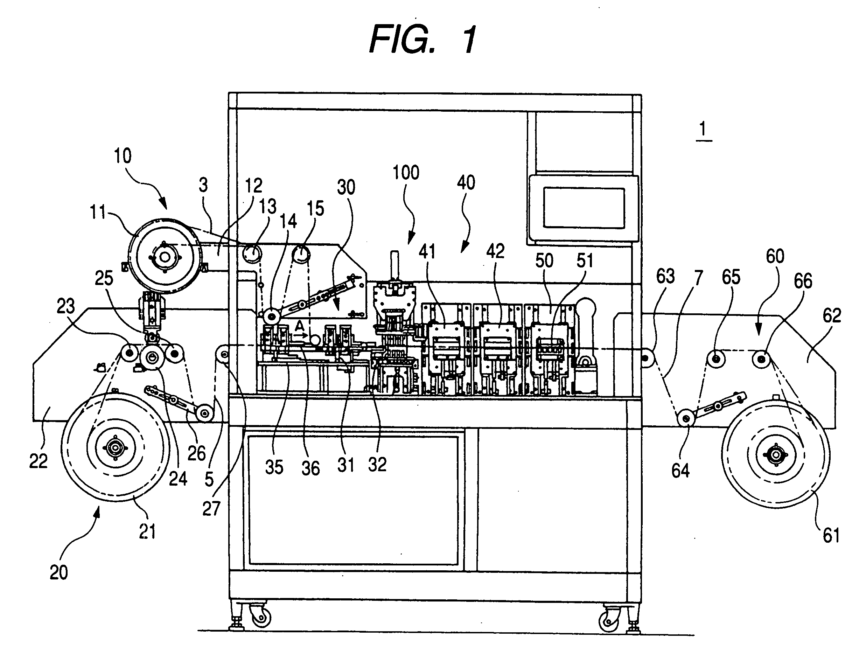

In the following, a sealing material attaching apparatus according to an embodiment of the present invention will be described with reference to the drawings. Fig. 1 schematically shows the structure of the apparatus according to the embodiment of the present invention as seen from the front. The attaching apparatus 1 is composed of a sealing material supply portion 10, a lead material supply portion 20, a material forwarding portion 30, an attaching portion 100, re-pressure-contact portion 40, an inspection portion 50 and a take-up portion 60 arranged in the mentioned order along the path through which a sealing material 3 and a lead material 5 are conveyed.

The sealing material supply portion 10 of this apparatus is composed of a sealing material reel 11 on which the sealing material 3 is wound, a sealing material reel holding portion 12 that rotatably holds the reel 11, sealing material guide rollers 13, 15 that guide the sealing material taken out from the reel 11, a sealing material tension roller 14 that applies a constant load to the sealing material 3. The lead material supply portion 20 is composed of a lead material reel 21 on which the lead material is wound, a lead material reel holding portion 22 that rotatably holds the reel 21, lead material guide rollers 23, 25, 27 that guide the lead material 5 taken out from the reel 21, a flattening roller 24 that is adapted to flatten the lead material 5 and a lead material tension roller 26 that applies a constant load to the lead material 5.

The material forwarding portion 30 is composed of a sealing material forwarding portion 31 and a lead material forwarding portion 35 arranged side by side along the direction perpendicular to the plane of the drawing sheet. The sealing material forwarding portion 31 includes a suction mechanism 32 for holding the end portion of the sealing material 3 by suction and a linear reciprocating mechanism, which is not shown in the drawings, for driving the suction mechanism 32 along the direction indicated by an arrow in the drawing. The lead material forwarding portion 35 includes a clamp mechanism 36 for pinching the lead material 5 and a linear reciprocating mechanism, which is not shown in the drawings, for driving the clamp mechanism 36 along the direction indicated by the arrow in the drawing.

The sealing material 3 and the lead material 5 are delivered to a attaching portion 100, which will be described later, through the material forwarding portion 30. The sealing materials 3 formed into a predetermined size are attached on the lead material 5 at a predetermined pitch. Then, the finished product 7 including the lead material etc. is transferred to the re-pressure-contact portion 40. The re-pressure-contact portion 40 includes a pressure contact unit 41, which is disposed above and below the finished product 7 under transferring, and a heating unit 42.

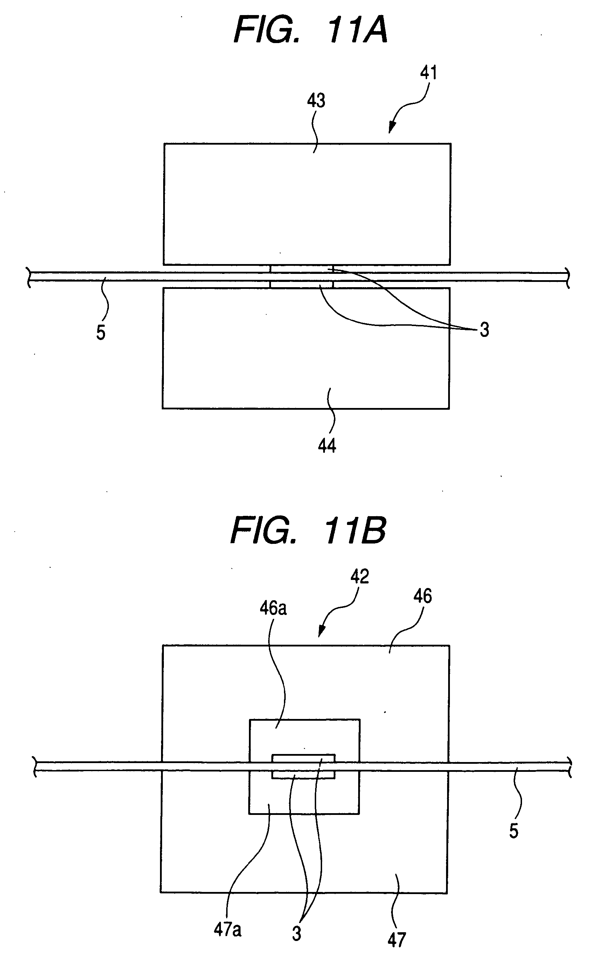

Fig. 11A schematically shows the structure of the pressure contact unit 41 as seen from the front. The pressure contact unit 41 is composed of an upper plate 43 and a lower plate 44. The plates 43 and 44 can be biased toward each other by a pressurizing mechanism, which is not shown in the drawings, with the lead material between. The temperature of these plates 43, 44 is controlled by a temperature adjusting mechanism, which is not shown in the drawings, in such a way that the temperature is kept, for example, 20 to 30 degrees higher than the melting point of the sealing material 3. In the pressure contact unit 41, pressure is applied on pieces of the sealing material 3 attached on both sides of the lead material 5 again by the upper plate 43 and the lower plate 44 and heating is also effected. Thus, close attachment of the sealing material to, for example, the sides of the lead material 5 etc., which has not been sufficiently achieved by the attaching portion 100, is improved.

Fig. 11B schematically shows the structure of the heating unit 42 as seen from the front. The heating unit is composed of an upper heating plate 46 and a lower heating plate 47. These plates 46 and 47 can be biased toward each other by a pressurizing mechanism, which is not shown in the drawings, with the lead material 5 between. The plates 46 and 47 have an upper recess 46a and a lower recess 47a respectively formed on the opposed surfaces. These recesses have a size large enough to accommodate pieces of the sealing material 3 attached on the lead material 5. The temperature of these plates 46, 47 is also controlled by a temperature control mechanism that is not shown in the drawings in a similar manner as in the pressure contact unit 41.

The upper heating plate 46 and the lower heating plate 47 holds the lead material 5 between them at a position near the sealing material pieces to heat them to a predetermined temperature. Simultaneously, the sealing material pieces are indirectly heated by the heating plates 46, 47 through the space formed by the upper recess 46a and the lower recess 47a. By this process, the sealing material that has been brought into pressure contact with the lead material 5 again by the pressure contact unit 41 is fused, and a gap present between the sealing material and the lead material can be eliminated completely.

In the inspection portion 50, there is provided an image pickup apparatus 51. An image of the sealing material 3 attached on the lead material 5 is obtained by this image pickup apparatus, and the presence/absence of the sealing material 3 and its attaching condition etc. are detected based on the image. The take-up portion 60 is composed of a finished product reel 61 on which the lead in the form of the finished product 7 on which the sealing material has been attached is wound, a finished product reel holding portion 62 that rotatably holds the reel 61, finished product guide roller 63, 65, 66 that guide the finished product 7 to be wound on the reel 61 and a finished product tension roller 64 that applies a constant load to the finished product 7.

The sealing material 3 stored on the sealing material reel 11 is held by the suction mechanism 32 in the state in which its tension is kept constant by the sealing material tension roller 14, and the suction mechanism 32 is driven to move in the direction indicated by the arrow in this state. Thus, the sealing material 3 is delivered to the attaching portion 100. The lead material 5 stored on the lead material reel 21 is pinched by the clamp mechanism 36 in the state in which its tension is kept constant by the lead material tension roller 26, and the clamp mechanism 36 is driven to move in the direction indicated by the arrow in this state. Thus, the lead material 5 is delivered to the attaching portion 100.

In the attaching portion 100, which will be described later, the sealing material 3 is cut to a predetermined length and attached on a predetermined position on the lead material 5. The lead material 5 on which the sealing material 3 has been attached, which constitutes the finished product 7, is transferred to the re-pressure-contact portion 40, in which it is pressed from the upper and lower sides of the lead material 5 to improve the attaching condition of the sealing material 3. The lead material etc. 7 after pressure contact is subject to inspection in terms of the presence/absence of the sealing material and the attaching condition etc. in the inspection portion 50 disposed downstream of the pressure contact portion 40. The lead material etc. 7 after inspection is transferred to the take-up portion 60 and wound on the reel 61 after passing through the guide rollers 63, 65, 66 in the state in which a constant load is applied on it by the finished product tension roller 64. Through the above-described process, the finished product 7, or the lead material on which the sealing material has been attached is obtained.

Next, the attaching portion 100 according to the present invention will be described in detail. There are two types of attaching portions 100 which are used in accordance with application. In one type, the positions on the lead material 5 at which pieces of the sealing material are to be attached are fixed, while in the other type, the attaching positions can be changed. In the following, an arrangement in which the attaching positions are fixed will be specifically described as embodiment 1, and an arrangement in which the attaching position can be changed will be specifically described as embodiment 2.

### Embodiment 1

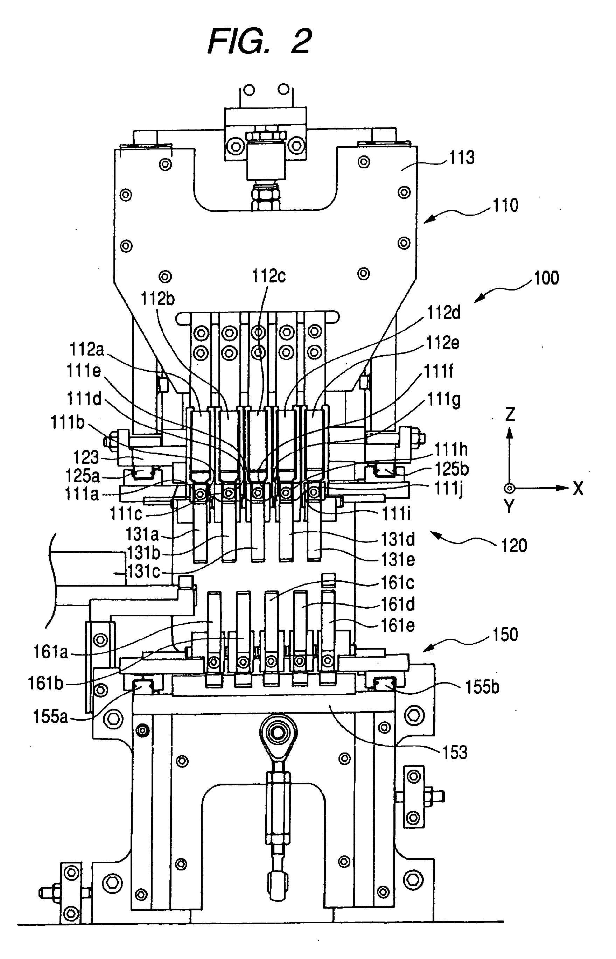

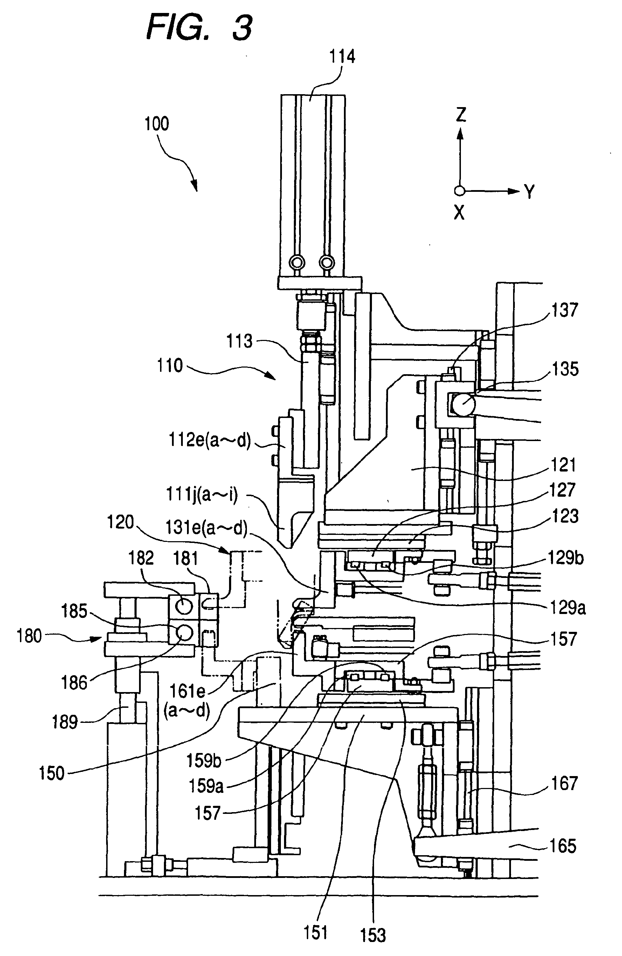

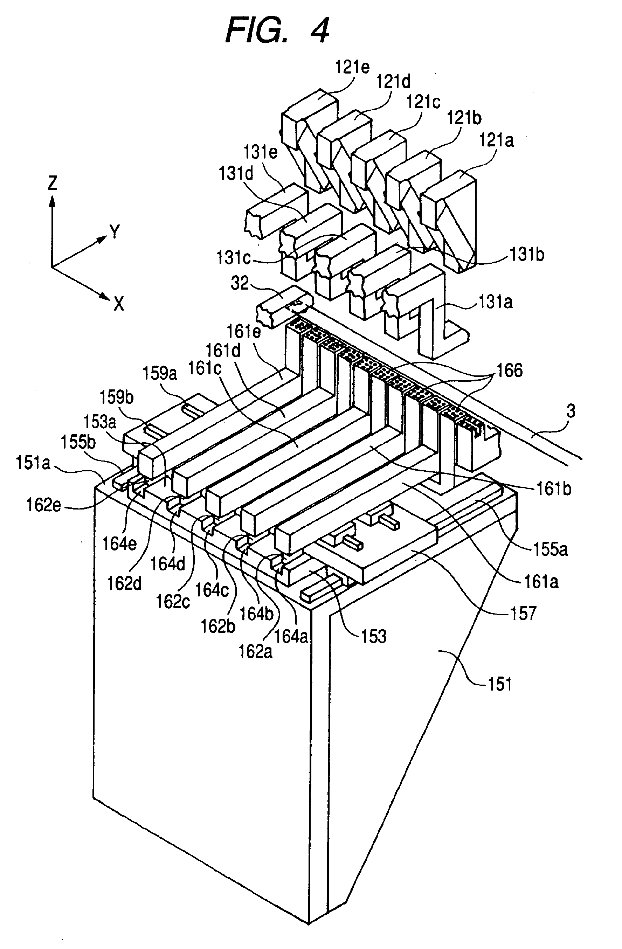

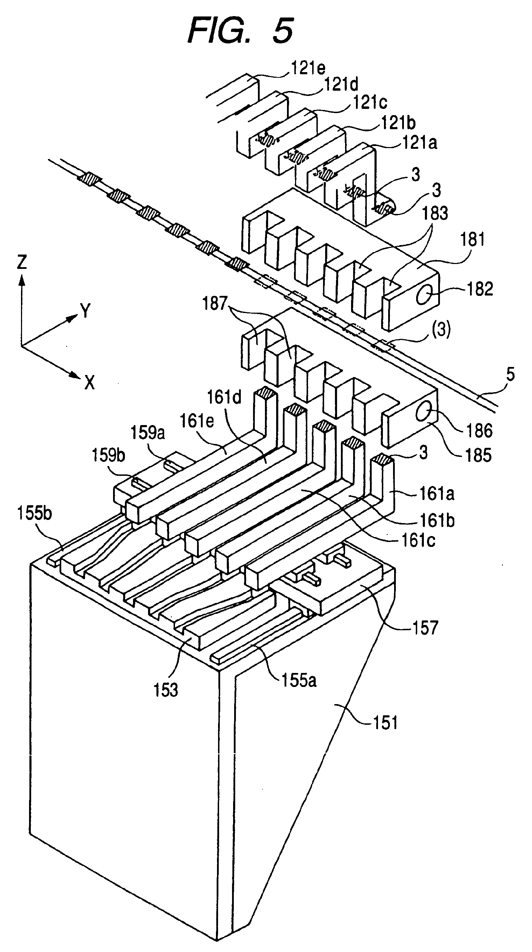

Fig. 2 schematically shows an attaching portion 100 according to embodiment 1 as seen from the front. Fig. 3 is a schematic side view thereof. Fig. 4 schematically shows the configuration of the components of this embodiment just before the sealing material 3 is cut. Fig. 5 schematically shows the configuration of the components of this embodiment just before the sealing material 3 is attached to the lead material 5. The attaching portion 100 is composed of a cutting unit 110, an upper pressure contact unit 120, a lower pressure contact unit 150, a heating unit 180. The heating unit 180 also functions as a holder for the lead material 5.

In order to facilitate descriptions of the driving direction of each component, the X axis is defined along a direction substantially parallel to the plane of the drawing sheet of Fig. 2, the Z axis is defined along the direction parallel to the plane of the drawing sheet and perpendicular to the X axis, and the Y axis is defined along the direction perpendicular to the X axis and the Z axis (i.e. perpendicular to the plane of the drawing sheet). These definitions apply to not only the first embodiment but also to the second embodiment that will be described later.

The cutting unit 110 is composed of a plurality of cutters 111a to 111j serving as cutting tools, cutter holders 112a to 112e that hold the cutters, a support base 113 on which the cutter holders are fixed and a cylinder 114 joined to the support base 113 to drive it along the Z axis direction. The cutter holder 112a to 112e extend along the Z axis and are arranged parallel to each other at regular intervals along the X axis direction. The cutters 111a to 111j are mounted on both sides of each of the cutter holders 112a to 112e in such a way that their edge portions are directed downward along the Z axis and that they are arranged at regular intervals along the X axis direction.

The upper pressure contact unit 120 is composed of an upper pressure contact unit mount base 121, an upper base plate 123, upper Y axis direction guide rails 125a and 125b, an upper slide table 127, upper X axis direction guide rails 129a and 129b and upper pressure contact tools 131a to 131e. The lower pressure contact unit150 is substantially symmetrical to the upper pressure contact unit 120 with respect to an X-Y plane and composed of a lower pressure contact unit mount base 151, a lower base plate 153, lower Y axis direction guide rails 155a and 155b, a lower slide table 157, lower X axis direction guide rails 159a and 159b and lower pressure contact tools 161a to 161e.

Each of the upper pressure contact unit 120 and the lower pressure contact unit 150 is adapted to be movable upward and downward along the Z axis direction. For this purpose, the upper pressure contact unit mount base 121 is equipped with a lever 135 for upwardly and downwardly moving the upper unit, and the lower pressure contact unit 150 is equipped with a lever for upwardly and downwardly moving the lower unit. Furthermore, to stabilize the upward and downward movement, the upper pressure contact unit 120 is slidably connected to an upper Z axis direction guide rail 137 extending along the Z axis direction, and the lower pressure contact unit 150 is slidably connected to a lower Z axis direction guide rail 167.

The structure of the lower pressure contact unit 150 will be described with reference to Figs. 4 and 5, which are perspective view schematically show the cutting state of the sealing material in the cutting unit 110 and the attaching state of the sealing member 3 respectively. The lower Y axis direction guide rails 155a and 155b extending parallel to the Y axis are disposed on both sides of the base plate 153 and fixed on a surface 151a parallel to the X-Y plane formed on the lower pressure contact unit mount base 151. The lower slide table 157 is independent from the lower base plate 153 and mounted at its bottom in such a way that it can slide along the Y axis direction relative to the lower Y axis direction guide rails 155a and 155b.

The lower X axis direction guide rails 159a and 159b extending parallel to the X axis direction are fixed on the top surface of the lower slide table 157. The lower pressure contact tools 161a to 161e are mounted at their bottoms in such a way that they can slide along the X axis direction relative to the lower X axis direction guide rails 159a and 159b. The lower pressure contact tools 161a to 161e extend along the Y axis direction and have, at their rear edge portions, lower projections 162a to 162e projecting downwardly in the Z axis direction.

These projections are respectively fitted in lower cam grooves 164a to 164e formed on the top surface 153a of the lower base plate 153. The lower projections 162a to 162e, the lower cam grooves 164a to 164e, upper projections 132a to 132e and upper cam grooves 164a to 164e constitute the pressure contact tool movement direction regulating apparatus. The lower pressure contact tools 161a to 161e have suction ports 163a to 163e on their upper surfaces facing toward the Z axis direction at their front end portions with respect to the Y axis direction. Pieces of the sealing material 3 cut off by the cutting unit 110 are separately sucked and held by these suction ports.

With the pressure contact unit 150 having the above-described structure, it is possible to regulate the drive direction of the pressure contact tools 161a to 161e in accordance with the lower cam grooves 164a to 164e upon driving the lower pressure contact tools 161a to 161e substantially along the Y axis direction. In addition, when the pressure contact tools 161a to 161e are driven along the lower cam grooves 164a to 164e, parallelism of the pressure contact tools is maintained by virtue of the function of the lower slide table 157 and the lower X axis direction guide rails 159a and 159b.

In this embodiment, the distances between the cam grooves 164a to 164e increases from the rear end to the front end, along the Y axis direction, of the lower base plate 153. In other words, the cam grooves 164a to 164e are formed in a radial manner, in a sense. Accordingly, when for example, the pressure contact tools 161a to 161e are driven frontward along the Y axis direction, each distance between the pressure contact tools gradually increases as the driving progresses. Even While the pressure contact tools 161a to 161e are driven following the cam grooves, parallelism of them is maintained and their distances are maintained to be equal to each other. Therefore, pieces of the sealing material 3 can be attached at a predetermined interval by stopping the driving of the pressure contact tools at the time when the distance between the centers of the cam grooves becomes equal to the distance between the centers of the sealing materials to be attached on the lead material and carrying out the attaching process.

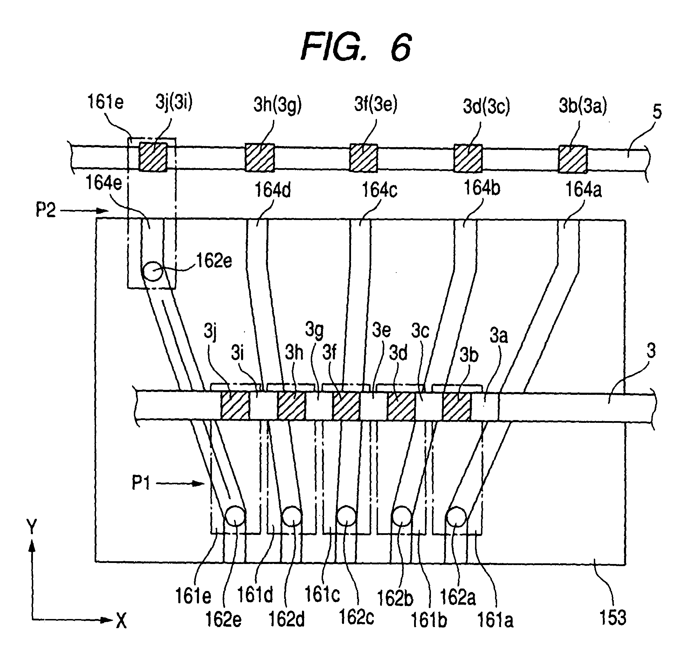

The structure of the lower pressure contact unit 150 is substantially symmetrical to the upper pressure contact unit 120 with respect to an X-Y plane, and the lower pressure contact unit 150 has substantially the same components as those in the upper pressure contact unit 120. In connection with this, the upper projections 132, the upper cam grooves 134, the lower projections 162 and the lower cam grooves constitute, in combination, the pressure contact tool movement direction regulating apparatus in the present invention. The difference between these pressure contact units reside only in the portion relating to the cam grooves provided in them. In the following, the structure of the lower cam grooves will be described in detail. Fig. 6 shows the configuration of the cam grooves formed on the lower base plate as viewed from above along the Z axis, movement paths of the projections in the lower pressure contact tools, and the positions at which the sealing material 3 is attached on the lead material 5.

Each of the sealing material pieces 3a to 3j shown in this drawing is a sealing material 3 having been cut to a predetermined length by the cutting unit 110. In an early stage of the attaching process, the lower pressure contact tools 161a to 161e suck and hold the sealing material pieces 3b, 3d, 3f, 3h and 3j during and after cutting at the positions at which they are cut. Each pressure contact tool sucks and holds the corresponding sealing material piece. In the position designated by P1 in this drawing, the lower projections 162a to 162e are disposed at the rear end portions (or the base points) of the lower cam grooves 164a to 164e.

In order to attach the sealing piece to the lead material 5, each pressure contact tool is driven to the position indicated by P2 in the drawing while holding a sealing material piece. In this process, the lower projection 162e, for example, is driven along the lower cam groove 164e. When the projection 162e is positioned at the front end portion (at the attaching position) of the cam groove 164e, the sealing material piece 3j held by the pressure contact tool 161e is positioned at just above the predetermined attaching position on the lead material 5, and an actual attaching process is carried out at this position.

The pressure contact tools 131a to 131e in the upper pressure contact unit 120, the upper projections 132a to 132e and the upper cam grooves 134a to 134e are substantially symmetrical [to those in the lower pressure contact unit 150] with respect to the sealing material 3 as described before. The upper pressure contact unit is offset from the lower pressure contact unit in the X axis direction by a distance corresponding to the cut length of the sealing material so that the pressure contact tools 131a to 131e are opposed to the sealing material pieces 3a, 3c, 3e, 3g, 3i. In other words, the base points of the upper cam grooves and the base points of the lower cam grooves are offset in the X axis direction by a predetermined distance. In this state, the upper pressure contact tools and the lower pressure contact tools are disposed alternately, and all of the series of sealing material pieces are sucked and held by the suction end portions of the respective pressure contact tools.

Furthermore, the upper cam grooves 134a to 134e are designed in such a way that when the upper projections 132a to 132e are positioned at the front end portions (or the attaching positions) of the corresponding upper cam grooves, the sealing material pieces 3a, 3c, 3e, 3g, 3i held by the respective pressure contact tools are opposed to the sealing material pieces 3b, 3d, 3f, 3h and 3j with the lead material 5 between. In this embodiment, the upper cam grooves and lower cam grooves are formed in radial patterns respectively. However, the shape of the cam grooves is not limited to that in this embodiment, but they may have any shape so long as they satisfy the conditions that at the base points, the pressure contact tools correspond to the positions of the sealing materials as they are cut, and at the drive side end, the upper pressure contact tools and the lower pressure contact tools are paired and disposed at predetermined positions.

The heating unit 180 is disposed in the attaching unit 100 at a position adjacent to the lead material held therein. The heating unit 180 is composed of an upper heater block 181, a lower heater block 185, an upper heater 182 and a lower heater 186 accommodated in these blocks to heat them, and a driving cylinder 189 that drives the blocks. As shown in Fig. 5, the shape of the upper heater block 181 and the shape of the lower heater block 185 are symmetrical with respect to an X-Y plane in which the lead material 5 is disposed.

These blocks 181 and 185 have recessed portions 183, 187 that can receive the front end portions, with respect to the Y axis direction, of the upper pressure contact tools 131a to 131e and the lower pressure contact tools 161a to 161e. Thus, areas on the lead material 5 other than the areas on which the sealing material is attached can be held between these blocks by driving the upper heater block 181 downwardly along the Z axis direction and driving the lower heater block 185 upwardly along the Z axis direction. Therefore, it is possible to heat the lead material to a predetermined temperature upon attaching the sealing material 3 by heating the blocks up to a predetermined temperature in advance.

### Embodiment 2

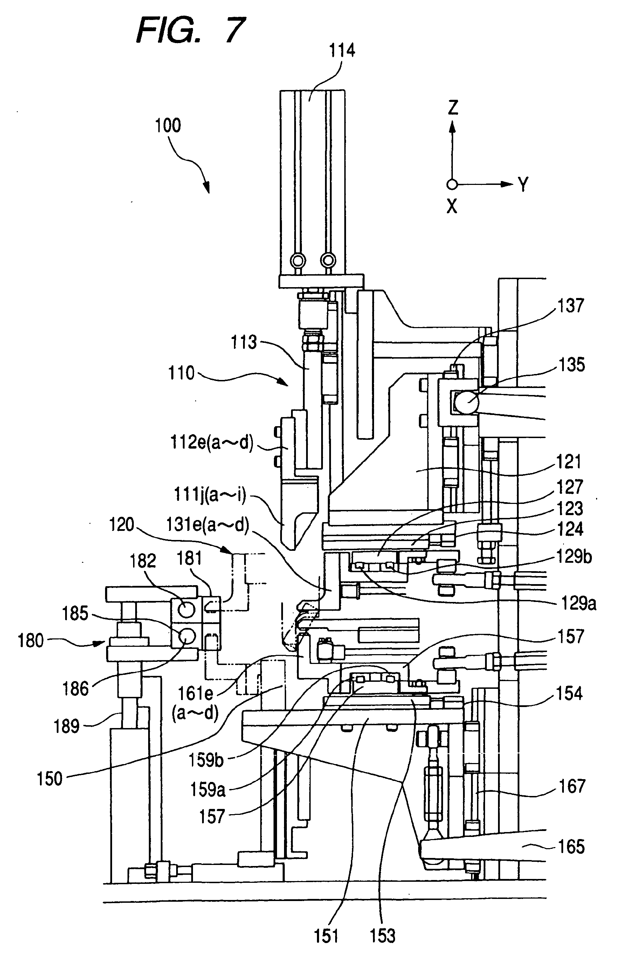

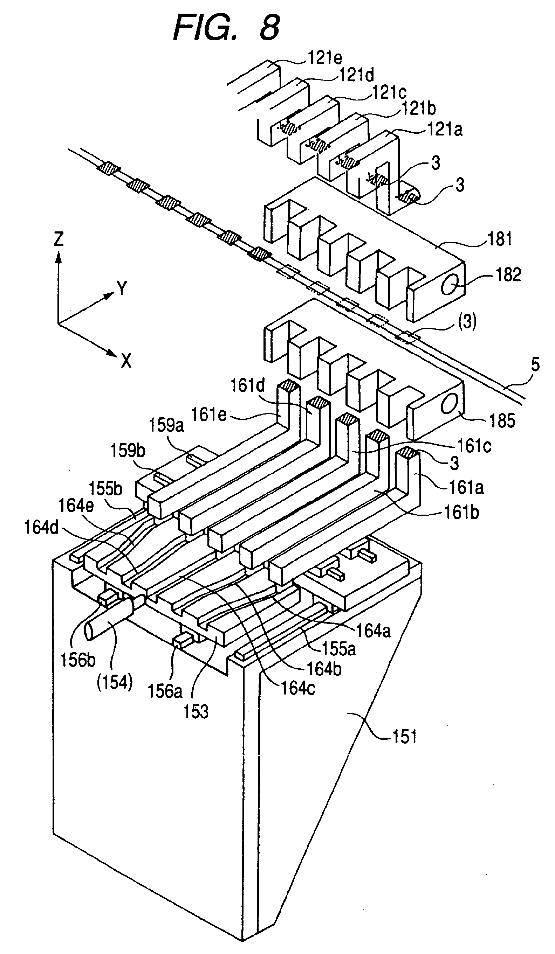

Next, an attaching portion 100 according to embodiment 2 of the present invention, in which the interval between the adjacent sealing material pieces can be set as desired, will be described. Fig. 7 schematically shows an attaching portion 100 according to embodiment 2 as seen from one side. Fig. 8 schematically shows the configuration of the components of this embodiment just before the sealing material 3 is attached to the lead material 5. In these drawings, the elements same as those in embodiment 1 are designated by the same reference signs, and only the elements having structures different from embodiment 1 will be described in detail. The structure other than the attaching portion 100 does not differ from embodiment 1, and the description thereof will be omitted.

Embodiment 2 is different from embodiment 1 in whether the upper base plate 123 and the lower base plate 153 are movable with respect to the Y axis direction or not. To make the base plates movable, for example, the lower base plate 153 is supported by second lower Y axis direction guide rails 156a and 156b fixed on the lower pressure contact unit mount base 151 in such a way as to be slidable along the Y axis direction. The lower base plate 153 is connected with a lower base plate driving motor 154 at its rear end with respect to the Y axis direction, and driven by the motor 154 to move along the Y axis direction on the lower guide rails 1561 and 156b.

For the upper base plate 123 also, second upper Y axis direction guide rails (not shown) and an upper base plate driving motor 124 are provided around it in a similar manner as the lower base plate 153. The lower base plate driving motor 154 is adapted to operate in synchronization with the upper base plate driving motor 124 to synchronize the drive positions with respect to the Y axis direction of the upper base plate 123 and the lower base plate 153.

The intervals between adjacent pairs of sealing material pieces are set to a predetermined amount by driving the lower pressure contact tools 161a to 161e along the Y axis direction, for example, in such a way that the lower projections 162a to 162e are driven to the front end portions with respect to the Y axis direction of the lower cam grooves 164a to 164e. From this state, if only the lower base plate 154 is driven along the Y axis direction (in this case, in the frontward direction), the intervals between the lower cam grooves 164a to 164e decrease. Accordingly, the intervals between the lower pressure contact tools 161a to 161e are reduced by the driving of the lower base plate 154. It is possible to set the intervals between the sealing material pieces 3 attached on the lead material 5 as desired by controlling the driving of the lower base plate 154 based on information on the relationship between the drive position of the lower base plate 154 and the intervals of the pressure contact tools obtained in advance.

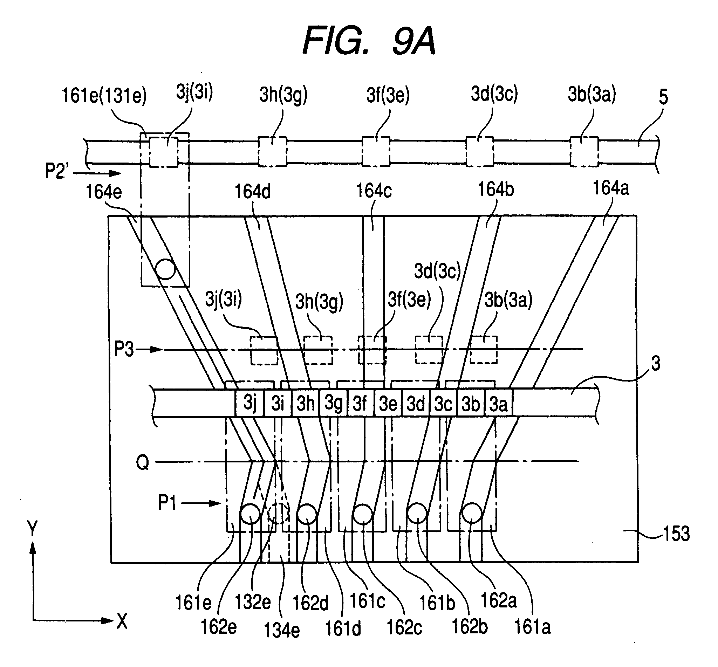

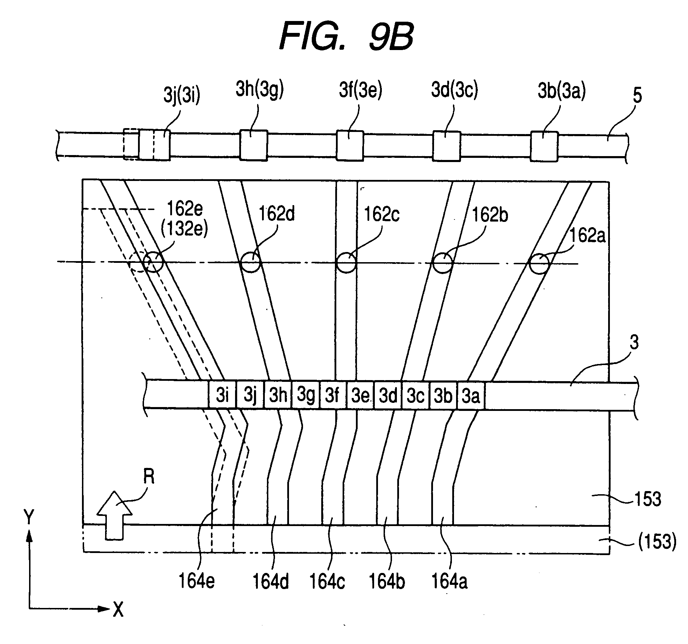

As described in connection with embodiment 1, the structure of the lower pressure contact unit 150 is substantially symmetrical to the upper pressure contact unit 120 with respect to an X-Y plane, and the upper pressure contact unit 120 has the substantially the same components. The difference between these units resides only in the portions related to the cam grooves. In the following, a detailed description will be made focusing on the structure of the upper and lower cam grooves, especially on the structure of the lower cam grooves. Figs. 9A and 9B show movement paths of the projections in the lower pressure contact tools, and the positions at which the sealing material 3 is attached on the lead material 5, in relative to the cam grooves formed on the lower base plate as seen from above with respect to the Z axis direction.

Each of the sealing material pieces 3a to 3j shown in this drawing is a sealing material 3 having been cut to a predetermined length by the cutting unit 110. In an early stage of the attaching process, the lower pressure contact tools 161a to 161e suck and hold the sealing material pieces 3b, 3d, 3f, 3h and 3j during and after cutting at the positions at which they are cut. Each pressure contact tool sucks and holds the corresponding sealing material piece. In the position designated by P1 in the drawings, the lower projections 162a to 162e are disposed at the rear end portions (or the base points) of the lower cam grooves 164a to 164e. As to the upper pressure contact tools, only the upper cam groove 134e, in which the upper projection 134e related to the pressure contact tool 131e is received to regulate the pressure contact tool 131e is exemplarily illustrated.

As shown in the drawings, the distance between the upper cam groove 134e and the lower cam groove 164e decreases from the respective base points on X-Y planes shown in the drawings toward the Y direction and the cam grooves are aligned along the vertical direction at position Q. At this stage, the suction end portion 133e of the upper pressure contact tool 131e and the suction end portion 163e of the lower pressure contact tool 161e are opposed to each other at position P3 while holding sealing material pieces 3j and 3i respectively. After the joining position Q, the upper cam groove 134e and the lower cam groove 164e form a pair to extend up to the attaching position (front end portion) while keeping aligned state along the vertical direction.

Only the upper cam groove 134a and the lower cam groove 164e are shown here by way of example, actually the upper cam grooves 134a to 134d and the lower cam grooves 164a to 164d are also paired respectively. The paired cam grooves are aligned along the vertical direction at the joining position Q, and extend to the front end portion, with respect to the Y axis direction, of the base plates 123 and 153 respectively while maintaining the aligned state. Thus, when the upper and lower pressure contact tools are driven frontward in the Y axis direction and the upper and lower projections are aligned along the vertical direction at the joining position Q, the sealing material pieces sucked and held by the respective pressure contact tools are paired at position P3 as sealing material piece pairs 3a and 3b, 3c and 3f, 3g and 3h, and 3i and 3j.

After that, each pressure contact tool is driven along the cam groove and stopped at position P2'. At this position, sealing material pieces 3a, 3c, 3e, 3g and 3i are opposed to sealing materials 3b, 3d, 3f, 3h and 3j with the lead material 5 between. In connection with this, with respect to the Y axis direction, position P2' of the pressure contact tools coincides with position P2 mentioned before. However, point P2' is discriminated here from point 2 mentioned before, since there is a possibility that the pressure control tools may be shifted along the X axis direction as will be described later.

In the case that the attachment intervals of the adjacent sealing material pieces realized when the pressure contact tools are at position P2' are appropriate, attaching process should be performed directly. However, there may be a case in which a change in the intervals is necessary. An operation in this embodiment in the case that the intervals are changed will be described in the following with reference to Fig. 9B. In this connection, since Fig. 9A is used as a reference, Fig. 9B also shows the lower base plate as viewed from above. Driving of the pressure contact tools with respect to the Y axis direction is stopped at position P2' (the same as position P2 in terms of the stop position of the pressure contact tools). The sealing material piece 3j (3i), the lower cam groove 164e, the lower projection 162e and the lower base plate 153 in this state are illustrated in the drawing by broken lines. From this state, only the base plate 153 is driven to move frontward (in the direction indicated by arrow R in the drawing) with respect to the Y axis direction.

With this movement, the lower projection 162e slides backward with respect to the Y axis direction relative to the corresponding cam groove. Since the lower cam grooves 164a to 164e are arranged in a substantially radial pattern as described before, the intervals between the lower projections 162a to 162e decrease with this relative sliding movement, and intervals of the lower pressure contact tools and the sealing material pieces held by them are also reduced.

The upper base plate 123 is also driven to move in synchronization with the driving of the lower base plate 153, whereby the intervals of the paired sealing material pieces decrease while maintaining the opposed state. With the above-described structure, the intervals of the sealing material pieces to be attached on the lead material can be controlled as desired by controlling the drive amount of the base plates.

In connection with this, the radial pattern mentioned here refers to the pattern in which the intervals of plurality of grooves starting from a plurality of base points arranged on a line increase as the grooves extend while maintaining constant ratios between the intervals of the grooves on lines parallel to said line. A description of embodiment 2 has been made to the effect that driving of the base plates and changing of the intervals of the pressure contact tools are effected after the pressure contact tools have been stopped at a predetermined position substantially at the front end of the corresponding cam grooves. However, in the actual sealing material attaching process, driving of the pressure contact tools and driving of the base plates are typically performed substantially simultaneously, and it should be understood that what is described above has been presented for illustrative purpose. Therefore, the order of driving of the pressure contact tools and driving of the base plates is not limited to that in the description of this embodiment.

A process in which the sealing material 3 is actually cut and the sealing material after cut (i.e. sealing material pieces) are attached on the lead material in the attaching portion 100 as described above will be described in the following with reference to a flow chart shown in Fig. 9. Firstly, in step 1, the suction mechanism 32 in the sealing material forwarding portion 30 sucks the end portion of the sealing material 3, and the suction unit 32 is moved to a predetermined position in the attaching unit 100 to feed a certain length of the sealing material 3 into the unit 100. Simultaneously, in step 11, the clamp mechanism 36 of the lead material forwarding portion 35 clamps the lead material 5, and the clamp mechanism 36 is moved to a predetermined position in the attaching unit 100 to feed a predetermined length of the lead material 5 into the unit 100.

After the feeding of the sealing material is completed, the upper pressure contact unit 120 is moved downward and the lower pressure contact unit 150 are moved upward simultaneously in step 2, and the sealing material 3 is sucked and held by the upper suction ports 133a to 133e and the lower suction ports 163a to 163e. After that, in step 4, the cutters 111a to 111j of the cutting unit 100 is moved down, so that the sealing material 3 is cut to a predetermined length.

In connection with this, auxiliary ports 166 provided between the lower pressure contact tools 161a to 161e are illustrated in Fig. 4. These ports are used for sucking and holding the sealing material 3 in cooperation with the upper pressure contact tools 131a to 131e and lower pressure contact tools 161a to 161e after the feeding of a certain length of the sealing material 3 is completed to retain the sealing material 3 stably before and after cutting. After the sealing material 3 is cut, suction of the sealing material by the suction mechanism 32 and the suction ports 166 is disabled, and the upper pressure contact tools 131a to 131e and the lower pressure contact tools 161a to 161e are moved downward and upward respectively to separate the sealing materials 3 after the cutting.

Simultaneously with the cutting of the sealing material 3, in step 12, the lead material 5 is held between the upper heater block 181 and the lower heater block 185 that have been heated to a predetermined temperature. Thus, heating of the lead material 5 is started. The held state is maintained continuously to perform heating of the lead material in subsequent step 13, and this state is kept until attaching of the sealing material is completed. In view of this, it is preferred that the process of step 12 be performed at an appropriate timing taking into account the heating condition of the lead material in this held state.

In next step 5, the upper pressure contact tools 131a to 131e and lower pressure contact tools 161a to 161e are driven to move front ward with respect to the Y axis direction following the upper and lower cam grooves 134a to 134e and 164a to 164e. As described before, by this movement, sealing materials that have been juxtaposed side by side are opposed to each other along the vertical direction. When the sealing materials held by the pressure contact tools are carried to predetermined positions on the lead material 5, the interval between paired sealing materials (sealing material pieces) will be a predetermined interval.

In embodiment 2, after the sealing material pieces are placed on the lead material in step 5 described above, each interval of adjacent sealing material pieces is changed further. In the case that an additional process step is required for setting the intervals of the sealing material pieces to be attached to the lead material (i.e. in the case of embodiment 2), step 6 is performed as such a process. In this step, after each of the projections has slid to a predetermined position in the front end portion with respect to the Y axis direction of the corresponding groove and the intervals of adjacent pairs of pressure contact tools have become predetermined intervals, the base plates 123 and 153 on which the cam grooves are provided are driven along the Y axis direction by the driving motors annexed to the respective base plates.

As a result, the intervals of the sealing material pieces are changed while the intervals of adjacent pairs of pressure contact tools are kept constant. After that, in step 14, the upper pressure contact tools 131a to 131e are moved down and the lower pressure contact tools 161a to 161e are moved up, and the sealing material pieces are attached on the upper and lower surfaces of the lead material. Although in the above-described embodiment, step 6 is performed after step 5, the order of these steps is not limited to this, for example, the process of these two steps may actually be performed simultaneously.

The sealing material pieces fuse at their surface in contact with the lead material 5 by the heat of the lead material 5 itself. In addition, they are pressed from above and below by the pressure contact tools, and sealing material pieces are made integral. After the sealing material pieces are fusion bonded, the pressure contact tools are moved away from the sealing material pieces and the heater blocks are moved away from the lead material in step 15 and step 16. After that, the upper pressure contact unit 120 and the lower pressure contact unit 150 are retracted to the position for sucking the sealing material 3 to prepare for the next process.

The lead material on which the sealing material pieces have been fusion-bonded is transferred to the re-pressure-contact portion 40, in which attachment between the sealing material pieces 3 and the lead material 5 is improved. In the re-pressure-contact portion 40, attachment of the sealing material pieces 3 and the lead material 5 is firstly improved by the pressing unit 41. Specifically, the sealing material pieces 3 and the lead material 5 are held together by the upper plate 43 and the lower plate 44 that are kept to a temperature higher than the melting point of the sealing material with a pressing force stronger than in the pressing force applied in the attaching portion 100 to improve the attachment.

Subsequently, in the heating unit 42, the lead material 5 is directly heated, and, in addition, the sealing material pieces 3 and the lead material 5 are subjected to indirect heating through the air. With these heating, sealing material is fused, so that gaps that may be present between the sealing material pieces and the lead material 5 can be eliminated. In this process the upper and lower sealing pieces are fused together and the sealing material 5 is circumferentially covered with the sealing material 3 thus fusion-bonded. In response to transfer of the lead material after fusion bonding of the sealing material, a new sealing material 3 and a lead material 5 on which the sealing material has not been attached are fed to the attaching portion 100, and the next attaching process is started.

By carrying out the present invention as described above, it is possible to attach the sealing material to the lead material in a completely fusion-bonded state along the circumference of the lead material. Accordingly, when jacketing of a battery is performed in the next process step using that lead material, a jacketing state with stable sealing performance can be achieved without excessive fusion of the sealing material.

In this embodiment, the sealing material and the lead material are provided in the state wound around respectively dedicated reels, and the lead material on which the sealing material has been attached is also taken up on a dedicated reel. However, the present invention is not limited to such a structure. The present invention may be applied in connection with supply of various shapes of sealing materials, formation and discharge of various shapes of lead materials on which sealing material have been attached. For example, the sealing material or the lead material may be provided in the form of a long material having a specific length, and the lead on which the sealing material has been attached may be cut to a predetermined length. Furthermore, lead material made of different materials and sealing materials made of different materials may be arranged in parallel to use them one after another.

It is preferred that the number of the pressure contact tools and other factors be changed appropriately in accordance with productivity required in actual processes. Although in this embodiment, the lead material and the sealing material are held by clamping and suction respectively, no particular limitation is placed on the mode of holding, and they may be held by a different method such as attraction of the lead material with a magnetic force. Furthermore, although in this embodiment, the pressure contact tool movement direction regulation apparatus is composed of projections and cam grooves, this apparatus is not limited to the structure of this embodiment but it may have any structure in which the intervals between the respective pressure contact tools are kept constant and the interval can be changed. Still further, although in this embodiment, the cam grooves are formed in a radial pattern, the pattern is not simply radial. They may be formed in nearly radial patterns composed of various shapes that allows appropriate changes of the attaching pitch of the sealing materials. For example, the pattern may include an area in which the cam grooves extend parallel, or include an area in which the cam grooves are represented by curves in an X-Y plane.

In the embodiments 1 and 2, the descriptions have been made only on the case in which the distance between adjacent grooves increases away from the base points. However, the present invention is not limited to the described case. For example, in the present invention, adjacent sealing material pieces forms pairs along the vertical direction, and there are gaps as large as one sealing material piece are formed between adjacent pairs. Therefore, in the case that the attachment intervals of the sealing material pieces on the lead material are smaller than these gaps, the distance between adjacent grooves may be decrease as they extend away from the base points.

The heating of the heating blocks in the heating unit may be effected by means of various heat media such as hot water for example. The shape of the heater block is not limited to the comb tooth shape having a recess as shown in connection with the embodiments, but it is desirable that the shape be changed appropriately in accordance with the attaching intervals of the sealing material or other factors. Furthermore, a cooling unit having a structure similar to the heating unit may be provided in the re-pressure-contact unit to facilitate solidification of the fused sealing material positively.

Although in the embodiments, the lead material have a tape-like shape and its top and bottom surfaces are oriented to the vertical direction, the present invention is not limited to the embodiments. Specifically, the top and bottom surfaces of the lead material may be oriented horizontally, the lead material may be a wire, and the transfer direction of the lead material etc. may be vertical. Accordingly, although in the description of the embodiments, components such as the pressure contact tools, projections and cam grooves are discriminated by the adjectives "upper" and "lower", it is desirable, to speak properly, that they should be discriminated by the adjectives "first" and "second". In the above description, the cam grooves are arranged in a radial manner, it is preferred that the arrangement pattern be modified appropriately depending on the attaching intervals of the sealing material and the required stroke along the Y axis direction, of the pressure contact tools etc..

By carrying out the present invention, it is possible to realize attachment of sealing materials to a lead material in which the sealing material attachment pitch can be easily changed while ensuring reliable attachment between the lead material and the sealing materials. Specifically, the sealing material can be attached to the lead material in the state completely fused to the lead material circumferentially. Accordingly, when jacketing of a battery is performed in the next process step using that lead material, a jacketing state with stable sealing performance can be achieved without excessive fusion of the sealing material.

Furthermore, by simultaneously attaching many sealing material pieces on both sides of a long lead material, productivity is enhanced. Still further, it is possible to cut a long sealing member to a predetermined length from the end thereof and to attach the pieces thus cut to a long lead material at predetermined intervals. Therefore, it is not necessary to cut the sealing material in a previous process nor to cut it again in a later process. Thus, reduction of the cost can be expected. Furthermore, by moving the base plate on which cam grooves are formed, it is possible to attach the sealing material pieces to the lead material at desired intervals.

Still further, even if the material of the lead is changed to, for example, copper, nickel and aluminum, temperature control optimal for the attaching process can be achieved by setting the heat capacity of the heating unit, the time through which the lead material is held by the unit, the timing of starting the holding of the lead material or the timing of stopping the holding of the lead material.

## Claims

1. A method for attaching a sealing material to a lead material by splitting the sealing material into pieces each having a predetermined length and fusion-bonding said pieces to predetermined positions on the lead material respectively, comprising the steps of:
holding said sealing material by means of a plurality of pressure contact tools;
cutting said sealing material thus held into said pieces each having a predetermined length using a plurality of cutting tools;
driving said plurality of pressure contact tools to transfer said pieces in such a way that adjacent pieces are opposed to each other with said lead material between to form pairs and said pairs are disposed on said lead material at regular intervals corresponding to said predetermined positions; and
attaching said sealing material pieces to said lead material by means of said plurality of pressure contact tools.

2. A method according to claim 1 wherein said lead material is disposed away from said sealing material by a predetermined distance and parallel to it, and while said pieces are transferred through said predetermined distance, said pairs are formed and said regular intervals between said pairs are arranged.

3. A method according to claim 1, wherein while said pieces are transferred, said adjacent pieces form pairs, and thereafter a plurality of said pairs are transferred onto the lead material following substantially radially patterned paths.

4. A method according to claim 1, wherein during the transfer of said pieces, said adjacent pieces form the pairs and said pieces are transferred onto said lead with the intervals between said pairs being changed at constant ratios.

5. A method according to claim 3 or 4, wherein adjustment of the intervals between said pairs is performed simultaneously with the transfer of said pairs onto the lead material.

6. A method according to claim 1, wherein in the step of attaching said pieces to the lead material, said lead material is heated through an area other than said predetermined positions on which said pieces are attached.

7. A method according to claim 1, further comprising a step of pressurizing said lead material and the sealing materials attached on said lead material and simultaneously heating them to improve a re-pressure-contact condition.

8. A method according to claim 1, further comprising a step of heating said lead material on which the sealing material has been attached and heating said attached sealing material to fuse said sealing material.

9. A method for attaching a sealing material to a lead material by splitting the sealing material into pieces each having a predetermined length and fusion-bonding said pieces to predetermined positions on the lead material respectively, wherein in a process of attaching said pieces to predetermined positions on the lead material, said lead material is heated through an area other than said predetermined positions.

10. A method according to claim 9, further comprising a process of pressurizing said lead material and the sealing materials attached on said lead material and simultaneously heating them to improve a re-pressure-contact condition.

11. A method according to claim 9, further comprising a process of heating said lead material on which the sealing material has been attached and heating said attached sealing material to fuse said sealing material.

12. In an apparatus for attaching a sealing material to a lead material by splitting the sealing material into pieces each having a predetermined length and fusion-bonding said pieces to predetermined positions on the lead material, a sealing material attaching portion of said apparatus comprising:
a lead material holding tool for holding said lead material at a predetermined position;
a cutting unit for splitting said sealing material into said plurality of pieces;
a plurality of first pressure contact tools capable of holding said pieces and arranged along the length direction of said sealing material so as to correspond to alternate pieces in said series of said pieces;
a plurality of second pressure contact tools capable of holding said pieces and arranged along the length direction of said sealing material so as to correspond to alternate pieces in said series of said pieces that are not held by said first pressure contact tools; and
a pressure contact tool movement direction regulation apparatus for making said first pressure contact tools and said second pressure contact tools to transfer said pieces to the predetermined position on said lead material, for making said first pressure contact tools and said second pressure contact tools that are adjacent to each other being opposed with their positions that hold said pieces facing to each other to form pairs, and for changing intervals of said plurality of pairs of said first pressure contact tools and second pressure contact tools thus formed.

13. An apparatus according to claim 12, wherein
said pressure contact tool movement direction regulation apparatus comprises first projections formed at end portions of said first pressure contact tools, first cam grooves in which said first projections are received, second projections formed at end portions of said second pressure contact tools and second cam grooves in which said second projections are received, and
when said first cam grooves and said second cam grooves are opposed to each other and viewed from above, said first cam grooves and said second cam grooves are arranged alternately at their base points so as to correspond to center-to-center intervals of said pieces and aligned to each other at a position predetermined distance away from the base points.

14. An apparatus according to claim 12, wherein
said pressure contact tool movement direction regulation apparatus comprises first projections formed at end portions of said first pressure contact tools, first cam grooves in which said first projections are received, second projections formed at end portions of said second pressure contact tools and second cam grooves in which said second projections are received, and
when said first cam grooves and said second cam grooves are opposed to each other and viewed from above, said first cam grooves and said second cam grooves are arranged alternately at their base points so as to correspond to center-to-center intervals of said pieces and aligned to each other at a position predetermined distance away from the base points, and further extending from the aligned position with the aligned state being maintained wherein ratios of intervals of the cam grooves are kept constant.

15. An apparatus according to claim 14, wherein a member on which said first cam grooves are formed and a member on which said second cam grooves are formed can be moved in synchronization with each other independently from said first and second pressure contact tools.

16. An apparatus according to claim 12, wherein said lead material holding tool comprises a heater block that holds said lead material by a portion other than said predetermined positions on which said pieces are attached to heat said lead material.

17. An apparatus according to claim 12, further comprising a pressure contact unit for pressing and heating said lead material and the sealing material attached on said lead material.

18. An apparatus according to claim 12, further comprising a heating unit for heating said lead material on which the sealing material has been attached and heating said attached sealing material to fuse said attached sealing material.

19. In an apparatus for attaching a sealing material to a lead material by splitting the sealing material into pieces each having a predetermined length and fusion-bonding said pieces to predetermined positions on the lead material, a sealing material attaching portion of said apparatus comprising:
a lead material holding tool for holding said lead material at a predetermined position;
a cutting unit for splitting said sealing material into said plurality of pieces;
a plurality of first pressure contact tools capable of holding said pieces for transferring said pieces to predetermined positions on said lead material and attaching said pieces actually on said lead material; and
a plurality of second pressure contact tools capable of holding said pieces for transferring said pieces to predetermined positions on said lead material and attaching said pieces actually on said lead material,
wherein said lead material holding tool comprises a heater block that holds said lead material by a portion other than said predetermined positions on which said pieces are attached to heat said lead material.

20. An apparatus according to claim 20, further comprising a pressure contact unit for pressing and heating said lead material and the sealing material attached on said lead material.

21. An apparatus according to claim 20, further comprising a heating unit for heating said lead material on which the sealing material has been attached and heating said attached sealing material to fuse said attached sealing material.
